(19) Europäisches Patentamt
European Patent Office
Office européen des brevets

(11) **EP 1 978 340 A2**

(12) **EUROPEAN PATENT APPLICATION**

(43) Date of publication:
**08.10.2008 Bulletin 2008/41**

(51) Int Cl.:
**G01K 1/08** (2006.01)

(21) Application number: **08153964.5**

(22) Date of filing: **02.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **03.04.2007 JP 2007097711**

(71) Applicant: **Denso Corporation**
**Kariya-city, Aichi-pref., 448-8661 (JP)**

(72) Inventor: **Yoshida, Koichi**
**Kariya-city Aichi 448-8661 (JP)**

(74) Representative: **TBK-Patent**
**Bavariaring 4-6**
**80336 München (DE)**

(54) **Temperature sensor with improved resistance against vibration**

(57) In a method of manufacturing a temperature sensor, a temperature sensing member is inserted into a cover from a thermal sensitive head via an open end thereof until an edge surface of one end portion of a lengthy sheath is in contact with a middle portion of an inner wall surface of a tubular wall of the cover in a longitudinal direction thereof so that a storage space is formed between the inner wall surface and the edge surface. The thermal sensitive head is stored in the storage space and covered with the tubular wall. The one end portion of the lengthy sheath is fixed to the inner wall surface of the tubular wall of the cover. The tubular wall of the cover is inwardly deformed to reduce a volume of the storage space, thus fully filling the insulator within the storage space.

FIG. 2

## Description

FIELD OF THE INVENTION

The present invention relates to temperature sensors with improved resistance against vibration, and methods of manufacturing the same.

BACKGROUND OF THE INVENTION

Temperature sensors with a thermistor as a thermo-sensitive element are preferably installed in a passage through which exhaust gas flows; this passage is formed inside of, for instance, a catalytic converter for exhaust emission control systems, or an exhaust pipe. Such a temperature sensor is operative to measure, with the thermistor, the temperature of exhaust gas flowing through such a passage.

Thermistors are sensitive to temperature, an electrical characteristic changing as the temperature changes.

A common temperature sensor is for example disclosed in Japanese Patent Application Publication No. 2004-317499. The temperature sensor disclosed in the Patent Application Publication consists of a cylindrical housing and a sensing element. The sensing element is installed in the cylindrical housing such that one end portion of the sensing element projects therefrom. The sensing element is provided at the head of its overhanging portion with a thermistor. The sensing element is provided with a pair of core wires covered with a sheath by which the core wires are electrically insulated. One end of each of the core wires projects from one end of the sheath.

The one ends of the pair of core wires are connected with a pair of electrode wires mounted in the thermistor, and the other ends thereof are connected with a control circuit.

The thermistor with the paired electrode wires and the paired core wires are installed within a substantially cylindrical metallic cover with one closed end. In order to improve the sensitivity of the covered thermistor to temperature, an electric insulator with high thermal conductivity is filled in a thermistor storage space defined by the inner circumference of the metallic cover and the one end of the sheath.

When the temperature sensor is installed in a passage through which exhaust gas flows, heat is received by the metallic cover, and the received heat is transferred via the insulator to the thermistor. This allows the temperature of the thermistor to change so that the electric character of the thermistor is changed. The change in the electrical characteristic of the thermistor is measured thereby as an electric signal, and the electric signal is sent to the control circuit via the electrode wires and the core wires. This permits the control circuit to measure the temperature of the exhaust gas based on the electric signal sent from the thermistor.

In particular, in the temperature sensor disclosed in the Patent Application Publication set forth above, in order to prevent heat escape from the insulator via the sheath, a space is provided between the insulator and the one end of the sheath to separate them.

The space provided between the insulator and the one end of the sheath however may cause the core wires to vibrate relative to the thermistor when the temperature sensor is vibrated. This may cause the damage of the electrode wires mounted in the thermistor, resulting the failure of the thermistor.

SUMMARY OF THE INVENTION

In order to avoid vibration of the core wires relative to the thermistor to thereby secure resistance against vibration, the insulator can be filled thoroughly within the thermistor storage space.

In producing, in quantity, such a temperature sensor whose insulator is designed to be filled throughout the thermistor storage space, during the process of feeding the insulator into the thermistor storage space, sensor-to-sensor variation in the rate of insulator feeding may result. The sensor-to-sensor variation in the rate of insulator feeding may generate cavities within the thermistor storage space of some of the mass produced temperature sensors; some of these mass produced temperature sensors have poor resistance against vibration.

In view of the background, an object of at least one aspect of the present invention is to provide temperature sensors and method of manufacturing them; these temperature sensors have sufficient resistance against vibration even if sensor-to-sensor variation in the rate of feeding an insulator into each of the temperature sensors occurs.

According to one aspect of the present invention, there is provided a temperature sensor. The temperature sensor includes a thermal sensitive element having a pair of electrodes coupled thereto, and a sheathed wiring member. The sheathed wiring member includes a pair of wires each with one end, and a lengthy sheath having one end portion and covering the pair of wires such that the one end of each of the wires overhangs from an edge surface of the one end portion of the lengthy sheath. The one end of each of the wires is connected with a corresponding one of the electrodes. The temperature sensor includes a cover having a tubular wall with a closed end and an open end opposite thereto. The one end portion of the lengthy sheath is inserted in the cover via the open end thereof. An inner wall surface of the tubular wall of the cover and the edge surface of the one end portion of the lengthy sheath prove a storage space therebetween. The thermal sensitive element, the pair of electrodes, and the one end of each of the wires are stored in the storage space and covered with the tubular wall. At least part of an outer surface of the tubular wall is formed with an inward recess. The inward recess is located between the edge surface of the one end portion of the lengthy sheath and the electrodes. The temperature sensor includes an electric insulator filled thoroughly within the storage space.

According to another aspect of the present invention, there is provided a method of manufacturing a temperature sensor. The method includes preparing a temperature sensing member. The temperature sensing member includes a thermal sensitive element having a pair of electrodes coupled thereto; and a sheathed wiring member. The sheathed wiring member includes a pair of wires each with one end; and a lengthy sheath having one end portion and covering the pair of wires such that the one end of each of the wires overhangs from an edge surface of the one end portion of the lengthy sheath. The one end of each of the wires is connected with a corresponding one of the electrodes. The method includes preparing a cover having a lengthy tubular wall with a closed end and an open end opposite thereto, and feeding a predetermined volume of an insulator into the cover so that the insulator is filled in the cover. The method includes inserting the temperature sensing member into the cover from the thermal sensitive element via the open end thereof until the edge surface of the one end portion of the lengthy sheath is in contact with a middle portion of an inner wall surface of the tubular wall of the cover in a longitudinal direction thereof so that a storage space is formed between the inner wall surface of the tubular wall of the cover and the edge surface of the one end portion of the lengthy sheath. The thermal sensitive element, the pair of electrodes, and one end of each of the wires are stored in the storage space and covered with the tubular wall. The method includes fixing the one end portion of the lengthy sheath to the inner wall surface of the tubular wall of the cover, and inwardly deforming the tubular wall of the cover to reduce a volume of the storage space, thus fully filling the insulator within the storage space.

In the one and another aspect of the present invention, in producing the temperature sensor in volume, even if sensor-to-sensor variation in the rate of insulator feeding occurs, the insulator fully filled within the storage space allows no cavities therein.

This prevents the thermistor, the electrode wires, and the wires from vibrating at individually different frequencies even if the temperature sensor is vibrated. This makes it possible to avoid the failure of the thermal sensitive element due to physical factors.

BRIEF DESCRIPTION OF THE DRAWINGS

Other objects and aspects of the invention will become apparent from the following description of embodiments with reference to the accompanying drawings in which:

Fig. 1 is a partially cross sectional view schematically illustrating an internal structure of a temperature sensor according to an embodiment of the present invention;

Fig. 2 is an enlarged longitudinal cross sectional view of a portion of the temperature sensor circled by A illustrated in Fig. 1;

Fig. 3 is a cross sectional view taken on line B-B in Fig. 2;

Fig. 4A is a view schematically demonstrating an insulator filling process according to the embodiment;

Fig. 4B is a view schematically illustrating a slurry insulator filled in a metallic cover illustrated in Fig. 1 at the completion of the insulator filling process according to the embodiment;

Fig. 5A is a view schematically demonstrating a press fitting process according to the embodiment;

Fig. 5B is a view schematically illustrating a sheathed wiring member 130 installed in the metallic cover at the completion of the press fitting process according to the embodiment;

Fig. 6A is a view schematically demonstrating a crimping process according to the embodiment;

Fig. 6B is a view schematically illustrating a thermal sensitive head illustrated in Fig. 1 at the completion of the crimping process according to the embodiment;

Fig. 7A is a view schematically demonstrating a crimping process according to a modification of the embodiment; and

Fig. 7B is a view schematically illustrating the thermal sensitive head at the completion of the crimping process according to the modification of the embodiment.

DETAILED DESCRIPTION OF EMBODIMENTS OF THE INVENTION

An embodiment of the present invention will be described hereinafter with reference to the accompanying drawings.

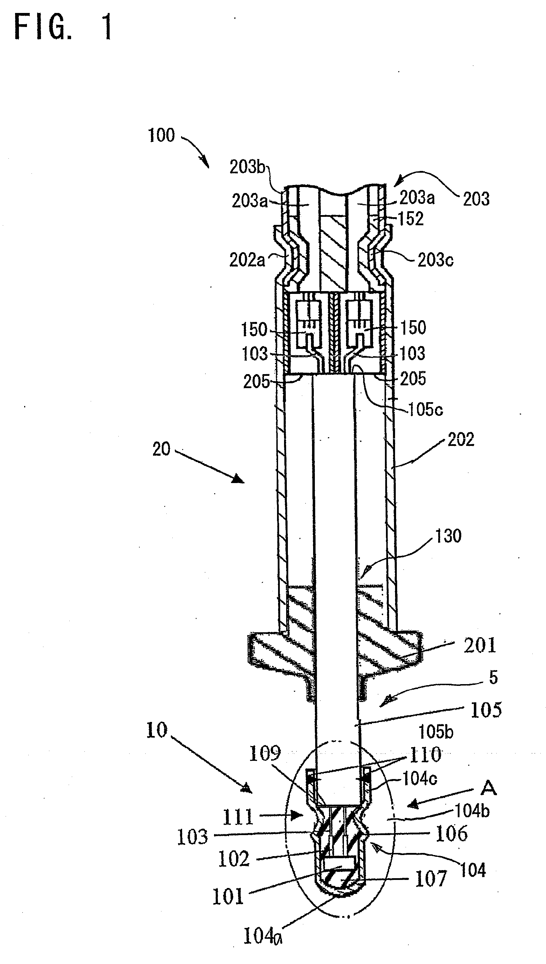

Referring to Fig. 1, there is provided a temperature sensor 100 applied to measure the temperature of exhaust gas discharged from an engine for vehicles.

The temperature sensor 100 consists essentially of a lengthy temperature sensing member 5 and a substantially cylindrical housing 20 for supporting and protecting the temperature sensing member 5.

The housing 20 is generally formed of a holder 201 having a lengthy opening therethrough, and a substantially annular metallic tube 202 one end of which is fixedly joined to one opposing end of the holder 201 by being crimped and/or welded thereto. This allows the opening and the inner hollow portion of the tube 202 to communicate with each other.

The temperature sensing member 5 is so disposed in the opening of the holder 201 and the tube 202 as to be aligned with the center of the housing 20 (holder 201 and the tube 202). One end portion of the temperature sensing member 5 projects from the other end of the holder 201.

The temperature sensing member 5 is provided at the tip end of its overhanging portion with a thermal sensitive head 10. The temperature sensing member 5 is also provided with a sheathed wiring member 130 coupled to the thermal sensitive head 10.

The temperature sensor 100 is arranged such that the thermal sensitive head 10 is located in a passage through which the exhaust gas discharged from the engine flows. The passage is formed inside of, for instance, a catalytic converter for an exhaust emission control system of the engine or an exhaust pipe thereof.

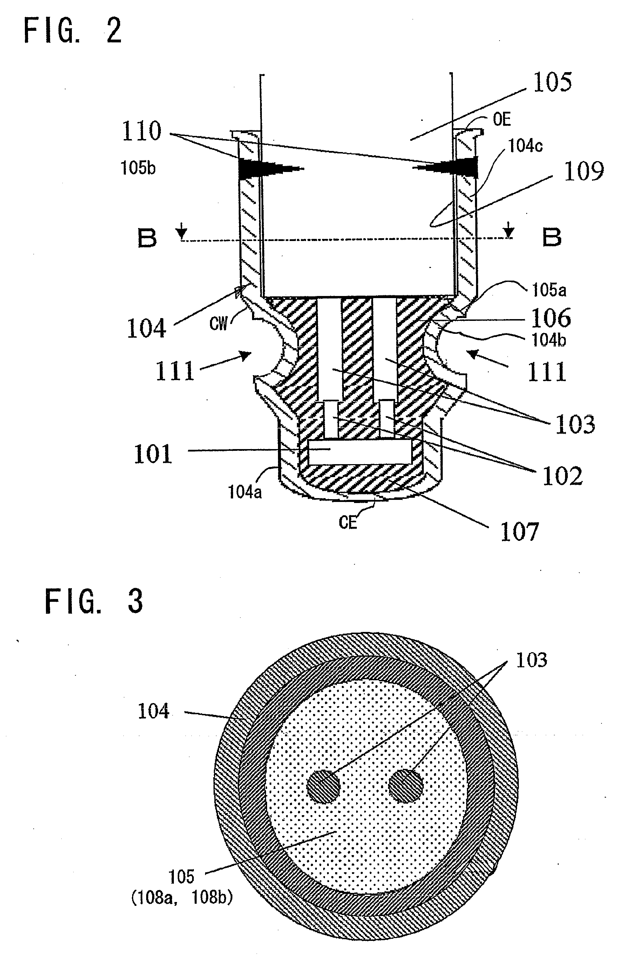

Referring to Fig. 2, the thermal sensitive head 10 consists of a thermistor 101, a pair of electrode wires 102, a metallic cover 104, and an electric insulator 107.

The thermistor 101 is used as an example of thermal sensitive elements. The thermistor 101 is, for example, a thermally sensitive resistor whose resistance varies as the temperature changes.

The pair of electrode wires 102 is made of, for example, platinum. One ends of the pair of electrode wires 102 are mounted in the thermistor 101 such that the remaining portions thereof are opposite to each other with a predetermined interval therebetween.

The sheathed wiring member 130 is composed of a pair of core wires 103 and a substantially cylindrical pin or post like sheath 105. Each of the core wires 103 is made of, for example, stainless steel, and has a substantially circular shape in its lateral cross section. The core wires 103 are covered with the sheath 105 by which they are electrically insulated.

One end of one of the core wires 103 projecting from a first edge surface 105a of one end portion 105b of the sheath 105 is connected with one of the pair of electrode wires 102. Similarly, one end of the other of the core wires 103 projecting from the first edge surface 105a of the one end portion 105b of the sheath 105 is connected with the other of the pair of electrode wires 102. For example, the one ends of the core wires 103 and the electrode wires 102 are joined to each other by laser welding or resistance welding.

The metallic cover 104 is configured to completely cover the thermistor 101, the pair of electrode wires 102, the pair of core wires 103, and the one end portion 105b of the sheath 105 so as to protect them.

For example, a stainless steel plate is prepared, and deep drawing is applied to the stainless steel plate so that the metallic cover 104 having an inner hollow cylindrical shape with one closed end CE is formed.

The metallic cover 104 has a three-stepped cylindrical shape. Specifically, the metallic cover 104 has a first cylindrical step wall 104a with the closed end CE, and a second cylindrical step wall 104b continuing therefrom and having inward recesses 111.

The inward recesses 111 are arranged opposite to each other. Each of the inward recesses 111 has a substantially semicircle shape in a cross section in parallel to the axial direction of the cover 104. Each of the inward recesses 111 has a height determined such that an inner surface thereof is in non-contact with the core wires 103.

The metallic cover 104 has a third cylindrical step wall 104c continuing from the second cylindrical step wall 104b and having a diameter longer than the that of the second cylindrical step wall 104b.

For example, the thermistor 101 has a plate-like shape, and is made of, for instance, sinter-formed Cr(Chromium)-Mn(Manganese) based semiconductor materials. The thermistor 101 is so installed in the first cylindrical step wall 104a as to be arranged at the center thereof. The diameter of the first cylindrical step wall 104a is determined to be as small as possible within the limits in which the thermistor 101 is separated from the inner circumference of the first cylindrical step wall 104a.

Because the thermistor 101 is located as close as possible to the inner circumference of the first cylindrical step wall 104a, heat loss during heat transfer between the metallic cover 104 and the thermistor 101 is reduced.

The metallic cover 104, that is, the third cylindrical step wall 104c has one open end OE opposite the closed end CE. The one end portion 105b of the sheathed wiring member 130 is pressed into the third cylindrical step wall 104c via the open end OE with a predetermined clearance 109 therebetween. The outer periphery of the first edge surface 105a of the sheath 105 is fitted in the inner peripheral surface of a connection wall CW continuously connecting between the second cylindrical step wall 104b and the third cylindrical step wall 104c.

At the open end side of the metallic cover 104, an annular welded joint 110 is formed to fixedly couple the cylindrical step wall 104c and the one end portion 105b of the sheath 105.

The electric insulator 107 is made of, for example, alumina, and filled within a storage space 106 defined by the inner circumference of the metallic cover 104 (first and second cylindrical step walls 104a and 104b) and the first edge surface 105a of the sheath 105.

Referring to Fig. 3, the sheath 105 is composed of a substantially cylindrical metallic tube 108a longitudinally extending around the pair of core wires 103, and a composite compact 108b filled in the space between the inner wall surface of the tube 108a and the pair of core wires 103. The other ends of the pair of core wires 103 project from a second edge surface 105c of the sheath 105 opposite the first edge surface 105a.

The composite compact 108b is formed by:

inserting electrically insulating material powders, such as magnesia powders, into the inner space of the tube 108a around each of the pair of core wires 103; and

subjecting the tube 108a in which the magnesia powders are filed to drawing, thereby forming the composite compact 108b between the inner wall surface of the tube 108a and each of the core wires 103.

With the configuration of the sheath 105, the first and second edge surfaces 105a and 105c of the sheath 105 around each core wire 103 are closed; this prevents foreign particles, such as hydrocarbons (HC) and/or carbon monoxides (CO), contained in the exhaust gas from entering into the interior of the sheath 105.

The sheathed wiring member 130 is disposed in the opening of the holder 201 and the tube 202 such that the one end portion 105b of the sheath 105 projects from the holder 201.

The temperature sensor 100 further consists of a pair of terminals 150, a rubber bush 152, and a wiring cable 203. The wiring cable 203 is composed of a pair of leads 203a and a substantially cylindrical sheath 203b with which the leads 203a are covered to be electrically insulated.

The rubber bush 152 is so inserted in one end of the sheath 203b as to be mounted on the inner circumference of the one end of the sheath 203b. One ends of the pair of leads 203a are connected with a control circuit, such as an electronic control unit (ECU) (not shown).

The other end of the tube 202 opposite the holder side end thereof is formed as a connector 202a, and the one end of the sheath 203b is formed as a connector 203c. Specifically, the connector 203c of the sheath 203b is pressed to be fitted into the connector 202a of the tube 202 so that the connector 203c is airtightly engaged with the connector 202a.

One ends of the pair of terminals 150 are connected with the other ends of the pair of core wires 103 projecting from the second edge surface 105c of the sheath 105.

The paired terminals 150 are so disposed within the tube 202 as to be close to the connector 202a. Specifically, when the wiring cable 203 and the tube 202 of the temperature sensor 100 are joined to each other by the engagement of their connectors 202a and 203c, the other ends of the pair of leads 203a are connected with the pair of terminals 150. This establishes electrical connection between the thermistor 101 and the control circuit via the electrode wires 102, the core wires 103, the terminals 150, and the leads 203a.

The joint portions between the pair of lead wires 203a and the pair of core wires 103 via the pair of terminals 150 are each covered with a resin tube 205 made of, for example, a heat-resistant resin. The resin tube 205 works to protect the joint portions.

Next, schematic operations of the temperature sensor 100 will be described hereinafter.

While exhaust gas discharged from the engine flows through the passage formed inside of the catalytic converter or the exhaust pipe, heat is received by the metallic cover 104, and the received heat is transferred via the electric insulator 107 to the thermistor 101. This allows the temperature of the thermistor 101 to change so that the resistance of the thermistor 101 is changed. The change in the resistance of the thermistor 101 is measured thereby as an electric signal, and the electric signal is sent to the control circuit via the electrode wires 102 and the core wires 103. This permits the control circuit to measure the temperature of the exhaust gas based on the electric signal sent from the thermistor 101.

Next, a method of manufacturing the temperature sensor 100 will be described hereinafter.

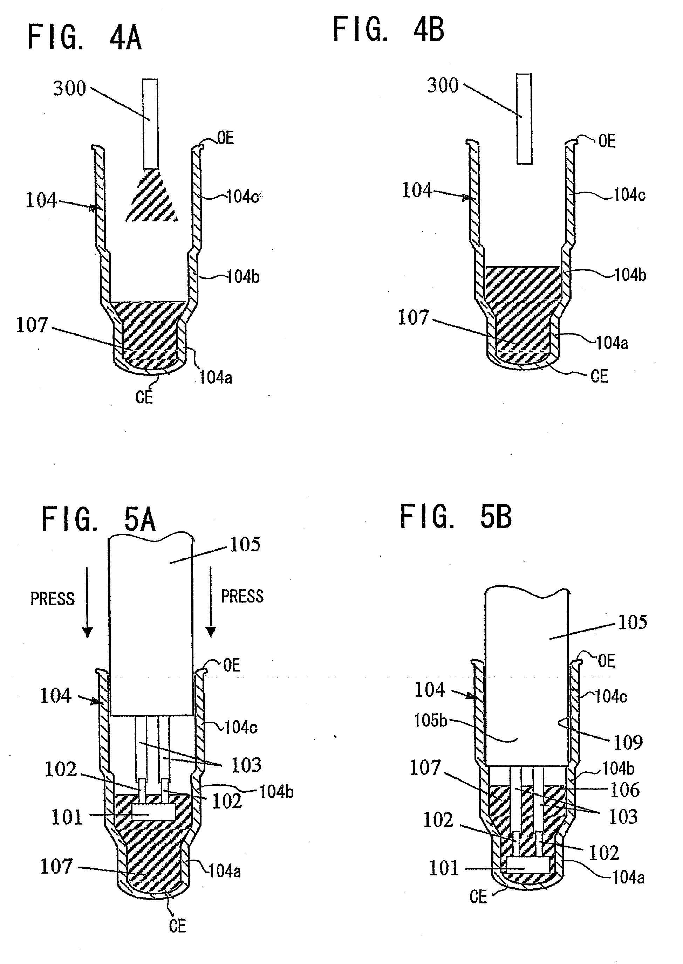

First, in an insulator filling process, the metallic cover 104, which has been produced using a stainless steel set forth above, and a dispenser with a needle 300 are prepared. The dispenser is designed to contain alumina in an aqueous slurry as the electric insulator 107 and to feed, from the needle 300, the contained alumina into the metallic cover 104 through the open end OE thereof. Note that the slurry alumina (slurry insulator 107) to be sprayed from the needle 300 is for instance formed by adding, to alumina, pure water and dispersant to modify the viscosity of the mixture of the alumina and pure water (see Figs. 4A and 4B). In place of the alumina, silica, magnesia, or another material can be used.

The amount of the slurry alumina to be supplied from the dispenser into the metallic cover 104 is determined as follows.

A target volume V to be supplied from the dispenser into the metallic cover 104 is expressed by the following equation [1]:

$$V = v1 - (\Delta V + \Delta v1) \quad [1]$$

where $\Delta V$ represents a tolerance ($\pm \Delta V$) for the target volume V, v1 represents a design volume of the storage space 106, and $\Delta v1$ represents a design tolerance ($\pm \Delta v1$) for the design volume v1 of the storage space 106. During the design stages, determination of the design volume v1 allows determination of the design tolerance $\pm \Delta v1$, and similarly, determination of the target volume V allows determination of the tolerance ($\pm \Delta V$).

Note that the tolerance ($\pm \Delta V$) depends on the supply facility capacity of the dispenser, and therefore the design tolerance ($\pm \Delta v1$) is constantly lower than the tolerance ($\pm \Delta V$). This can establish the following inequality [2]:

$$\Delta v1 < \Delta V \quad [2]$$

The design volume v1 of the storage space 106 is determined by subtracting a design volume of each of the thermistor 101, the electrode wires 102, and the projecting core wires 103 from the volume of a space; this space is defined by the inner circumference of the metallic cover 104 and the first edge surface 105a of the sheath 105 assuming that none of the thermistor 101, the electrode wires 102, and the projecting core wires 103 are installed in the storage space 106.

When the slurry alumina with the target volume V is sprayed from the needle 300 of the dispenser, the amount of the slurry alumina to be actually fed into the metallic cover 104 is represented as "X". The amount X of actually supplied slurry alumina meets the following inequality [3]

$$V - \Delta V \leqq X \leqq V + \Delta V \qquad [3]$$

The establishment of the inequality [2] allows the following inequality [4] to be established:

$$X \leqq v1 - \Delta v1 \qquad [4]$$

Referring to Fig. 5A, the electrode wires 102 of the sheathed member 130 mounted in the thermistor 101 are respectively joined to the one ends of the pair of core wires 103 by laser welding or resistance welding.
After the completion of the insulator filling process, the sheathed wiring member 130 integrated with the thermistor 101 is inserted, from its thermistor side, into the slurry-alumina filled metallic cover 104 such that the thermistor 101, the electrode wires 102, and the core wires 103 are kept noncontact with the inner circumference of the metallic cover 104.
Thereafter, when the one end portion 105b of the sheathed wiring member 130 of the is close to the open end OE of the metallic cover 104, the one end portion 105b of the sheathed wiring member 130 is pressed into the metallic cover 104 from the open end OE toward the closed end CE thereof (see Fig. 5B). The press fitting is carried out until the outer periphery of the first edge surface 105a of the sheath 105 is fitted in the inner peripheral surface of the connection wall CW continuously connecting between the second cylindrical step wall 104b and the third cylindrical step wall 104c.
The outer periphery of the first edge surface 105a of the sheath 105 fitted in the inner peripheral surface of the connection wall CW of the metallic cover 104 provides the storage space 106 defined between the first edge surface 105a of the sheath 105 and the inner circumference of the metallic cover 104.
At the time of the completion of the press fitting of the sheathed wiring member 130 in the metallic cover 104, a substantial volume Y of the storage space 106 is determined by subtracting the volume of each of the thermistor 101, the electrode wires 102, and the core wires 103 from the volume of a space; this space is defined by the inner circumference of the metallic cover 104 and the first edge surface 105a of the sheath 105 assuming that none of the thermistor 101, the electrode wires 102, and the core wires 103 are installed in the storage space 106.
In producing the temperature sensor 100 in volume, sensor-to-sensor vibration in the volume of the thermistor 101, the protecting cover 104, and/or the sheathed wiring member 130 occur. In particular, the sensor-to-sensor vibration in the volume of the protecting cover 104, and/or the sheathed wiring member 130 causes sensor-to-sensor vibration in the position of the first edge surface 105a of the sheath 105. The sensor-to-sensor vibrations set forth above causes sensor-to-sensor vibration in the volume Y of the storage space 106. Note that the volume Y of the storage space 106 meets the following inequality [5]:

$$v1 - \Delta v1 \leqq Y \leqq v1 + \Delta v1 \quad [5]$$

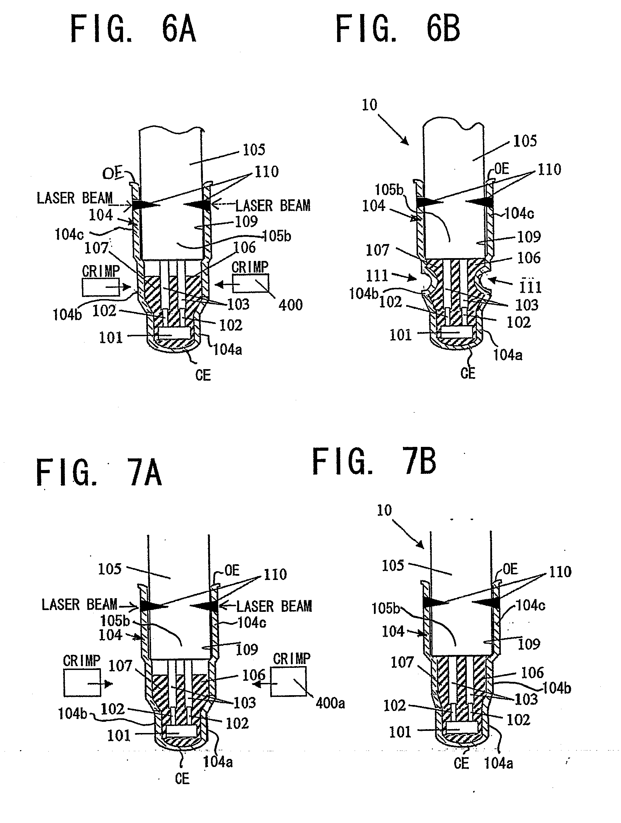

As described above, because the inequality [4] is constantly established, the amount X of actually supplied slurry alumina into the metallic cover 104 is equal to or lower than the volume "v1 - $\Delta$v1". For this reason, the outer periphery of the first edge surface 105a of the sheath 105 fitted in the inner peripheral surface of the connection wall CW of the metallic cover 104 provides a given length L is provided between the first edge surface 105a and a fluid level of the slurry alumina contained in the metallic cover 104. Note that the length L may be zero.
The given length L ensured between the first edge surface 105a and the fluid level of the slurry alumina contained in the metallic cover 104 prevents the slurry alumina from rising into the clearance 109 during the press fitting of the sheathed wiring member 130 in the metallic cover 104. This prevents poor weld between the cylindrical step wall 104c and the one end portion 105b of the sheath 105 due to part of the slurry alumina lying in the clearance 109.
After the completion of the press fitting process, an intermediate product integrated with the thermistor 101, the sheathed wiring member 130, and the metallic cover 104 is dried at a high temperature. The drying process evaporates water contained in the slurry alumina filled within the storage space 106; this results that the contained slurry alumina is dried to become a powder alumina (powder insulator 107).
Next, as illustrated in Fig. 6A, a laser beam is irradiated to an annular part of the outer circumference of the third cylindrical step wall 104c at the open end side thereof so as to form an annular welded joint 110. The annular welded joint 110 fixedly couples the cylindrical step wall 104c and the one end portion 105b of the sheath 105. Another method, such as plasma welding or crimping can be used to more fixedly join the cylindrical step wall 104c and the one end portion 105b of the sheath 105.
In addition, as illustrated in Figs. 6A and 6B, a swaging tool is prepared. For example, the swaging tool has a pair of dies 400 each has a substantially rectangular surface. The dies 400 are arranged such that the rectangular surfaces are located on either side of the outer circumference of the second cylindrical step wall 104b radially adjacent to the head 105c of the sheath 105 across the clearance 109.

The swaging tool works to inwardly move the dies 400 to locally crimp, by the rectangular surfaces, the outer circumference of the second cylindrical step wall 104b. This reduces the diameter of part of the outer circumference of the one end portion 105b of the sheath 105 to thereby form the inward recesses 111 in the one end portion 105b thereof.

When the reduction in volume of the storage space 106 by the inward recesses 111 is referred to as "a", it is determined such that the following equation [6] is constantly established:

$$a = (\Delta V + \Delta v) \times 2 \quad [6]$$

Because the tolerances $\Delta V$ and $\Delta v1$ are always constant, the reduction "a" in volume of the storage space 106 becomes always constant.

For this reason, even if the amount X of actually supplied slurry alumina into the metallic cover 104 and the volume Y of the storage space 106 are changed within the respective tolerances $\pm \Delta V$ and $\Delta v1$ individually in producing the temperature sensor 100 in volume, it is possible to fully fill the slurry alumina within the storage space 106 each of the mass produced temperature sensors 100.

Note that the powder insulator 107 being fully filled within the storage space 106 means that the interface of the powder insulator 107 is uniformly in contact with the first edge surface 105a of the sheath 105 (see Fig. 7B).

In the embodiment, the temperature sensor 100 is designed such that the ratio of the design volume v1 of the storage space 106 to the reduction "a" in volume of the storage space 106 is 1:0.2 (1/0.2=5). In other words, the temperature sensor 100 is designed so as to meet the following equation [7]:

$$v1 = 5a \quad [7]$$

To more secure resistance against vibration, the temperature sensor 100 is preferably designed such that a percentage of the reduction "a" in volume of the storage space 106 be within the range from 10 % to 40 %. In other words, the temperature sensor 100 is preferably designed such that the design volume v1 meet the following equation [8]:

$$2.5a \leqq v1 \leqq 10a \quad [8]$$

Thereafter, the powder alumina contained in the storage space 106 is fired by heating to thereby form the insulator 107 within the storage space 106. This results that the thermal sensitive head 10 is completed.

For example, after the process of producing the thermal sensitive head 10, as set forth above, the wiring cable 203 and the tube 202 of the temperature sensor 100 are joined to each other by the engagement of their connectors 202a and 203c. This allows the other ends of the core wires 103 to be connected with the leads 203a of the wiring cable 230 via the terminals 150, and the joint portions between the lead wires 203a and the core wires 103 via the terminals 150 are each covered with the resin tube 205.

This results that the temperature sensor 100 illustrated in Fig. 1 is completed.

As described above, the thermistor sensor 100 is provided with the insulator 107 filled thoroughly within the storage space 106 defined by the first edge surface 105a of the sheath 105 and the inner circumference of the first and second cylindrical step walls 104a and 104b of the metallic cover 104.

The insulator 107 is formed by:

feeding alumina in slurry into the metallic cover 104 to fill it therewithin;

inserting the sheathed wiring member 130 into the metallic cover 104;

pressing the one end portion 105b of the sheathed wiring member 130 into the metallic cover 104 so that the first edge surface 105a of the sheath 105 is fitted in the inner peripheral surface of the connection wall CW continuously connecting between the second cylindrical step wall 104b and the third cylindrical step wall 104c;

deforming inwardly part of the outer circumference of the one end portion 105b of the sheath 105 to form the inward recesses 111 in the one end portion 105b thereof; these inward recesses 111 reduce the volume of the storage space 106 to thereby fully fill the alumina in powder within the storage space 106; and firing the alumina in powder filled within the storage space 106.

Thus, in producing the temperature sensor 100 in volume, even if sensor-to-sensor variation in the rate of insulator feeding occurs, the alumina in powder filled thoroughly within the storage space 106 allows no cavities in the electric insulator 107.

This prevents the thermistor 101, the electrode wires 102, and the core wires 103 from vibrating at individually different frequencies even if the temperature sensor 100 is vibrated. In other words, this allows the vibration of each of the thermistor 101, the electrode wires 102, and the core wires 103 to synchronize with that of the whole of the thermal sensitive head 10 even if the temperature sensor 100 is vibrated. Accordingly, makes it possible to avoid:

the concentration of stress on the joint portions between the electrode wires 102 and the core wires 103; and

the failure of the thermistor 101 due to physical factors.

The temperature sensor 100 is preferably designed such that the reduction "a" in volume of the storage space 106 be within the range from 10 % to 40 %.

If the reduction "a" in volume of the storage space 106 were lower than 10 %, the packing density of the insulator 107 in the storage space 106 may become insufficient; this result has been demonstrated by the inventor's experiments.

If the reduction "a" in volume of the storage space 106 were higher than 40 %, the inward deformation of the metallic cover 104 may adversely affect some components of the thermal sensitive head 10 located within the storage space 106; this result has been demonstrated by the inventor's experiments. For example, the reduction "a" in volume of the storage space 106 were higher than 40 %, the inward deformation of the metallic cover 104 may adversely affect the electrode wires 102 or the thermistor 101.

However, as set forth above, when the reduction "a" in volume of the storage space 106 is within the range from 10 % to 40 %, it is possible to more reliably avoid the development of the problems set forth above.

In the method of manufacturing the temperature sensor 100, the number of the inward recesses 111 can be freely determined as long as the reduction "a" in volume of the storage space 106 meets the equation [6] and excessive stress is not applied to the thermistor 101, the electrode wires 102, and the core wires 103. The circumferential length of each of the inward recesses 111 can also be freely determined as long as the reduction "a" in volume of the storage space 106 meets the equation [6] and excessive stress is not applied to the thermistor 101, the electrode wires 102, and the core wires 103.

In the embodiment, a volume Y' of the storage space 106 after deformation may become lower than the amount X actually supplied slurry alumina into the metallic cover 104. In this case, the insulator 107 in powder is merely compressed with little effect on the thermistor 101, the electrode wires 102, and the core wires 103. Instead, the compression of the insulator 107 in powder allows the packing density thereof in the storage space 106 to increase, making it possible to more improve the protection ability of the insulator 7 with respect to the thermistor 101.

In the embodiment, as described above, the metallic cover 104 has a three-stepped cylindrical shape. The structure allows the thermistor 101 to be located as close as possible to the inner circumference of the first cylindrical step wall 104a via the insulator 107, making it possible to reduce heat loss during heat transfer between the metallic cover 104 and the thermistor 101.

Thus, in a modification of the embodiment, in the crimping process, a swaging tool is prepared. For example, the swaging tool has a pair of dies 400a each has a substantially semicylindrical surface. The dies 400a are arranged such that the semicylindrical surfaces are located on either side of the outer circumference of the second cylindrical step wall 104b.

The swaging tool works to move the dies 400a towards each other to uniformly crimp, by the semicylindrical surfaces, the outer circumference of the outer circumference of the second cylindrical step wall 104b (Fig. 7A). This uniformly reduces the diameter of the outer circumference of the second cylindrical step wall 104b, thus reducing the volume of the storage space 106 (see Fig. 7B).

In the modification, the reduction in volume of the storage space 106 meets the equation [6] as well as the embodiment.

While there has been described what is at present considered to be the embodiment and its modifications of the present invention, it will be understood that various modifications which are not described yet may be made therein, and it is intended to cover in the appended claims all such modifications as fall within the true spirit and scope of the invention.

In a method of manufacturing a temperature sensor, a temperature sensing member is inserted into a cover from a thermal sensitive head via an open end thereof until an edge surface of one end portion of a lengthy sheath is in contact with a middle portion of an inner wall surface of a tubular wall of the cover in a longitudinal direction thereof so that a storage space is formed between the inner wall surface and the edge surface. The thermal sensitive head is stored in the storage space and covered with the tubular wall. The one end portion of the lengthy sheath is fixed to the inner wall surface of the tubular wall of the cover. The tubular wall of the cover is inwardly deformed to reduce a volume of the storage space, thus fully filling the insulator within the storage space.

## Claims

1. A temperature sensor comprising:

   a thermal sensitive element having a pair of electrodes coupled thereto;
   a sheathed wiring member comprising: a pair of wires each with one end; and a lengthy sheath having one end portion and covering the pair of wires such that the one end of each of the wires overhangs from an edge surface of the one end portion of the lengthy sheath, the one end of each of the wires being connected with a corresponding one of the electrodes;
   a cover having a tubular wall with a closed end and an open end opposite thereto, the one end portion of the lengthy sheath being inserted in the cover via the open end thereof, an inner wall surface of the tubular wall of the cover and the edge surface of the one end portion of the lengthy sheath providing a storage space therebetween, the thermal sensitive element, the pair of electrodes, and the one end of each of the wires being stored in the storage space and covered with the tubular wall, at least part of an outer surface of the tubular wall being formed with an inward recess, the inward recess being located between the edge surface of the one end portion of the lengthy sheath and the electrodes; and

an electric insulator filled thoroughly within the storage space.

2. A method of manufacturing a temperature sensor, the method comprising:

preparing a temperature sensing member, the temperature sensing member comprising: a thermal sensitive element having a pair of electrodes coupled thereto; and a sheathed wiring member, the sheathed wiring member comprising: a pair of wires each with one end; and a lengthy sheath having one end portion and covering the pair of wires such that the one end of each of the wires overhangs from an edge surface of the one end portion of the lengthy sheath, the one end of each of the wires being connected with a corresponding one of the electrodes;

preparing a cover having a lengthy tubular wall with a closed end and an open end opposite thereto;

feeding a predetermined volume of an insulator into the cover so that the insulator is filled in the cover;

inserting the temperature sensing member into the cover from the thermal sensitive element via the open end thereof until the edge surface of the one end portion of the lengthy sheath is in contact with a middle portion of an inner wall surface of the tubular wall of the cover in a longitudinal direction thereof so that a storage space is formed between the inner wall surface of the tubular wall of the cover and the edge surface of the one end portion of the lengthy sheath, the thermal sensitive element, the pair of electrodes, and the one end of each of the wires being stored in the storage space and covered with the tubular wall;

fixing the one end portion of the lengthy sheath to the inner wall surface of the tubular wall of the cover; and

inwardly deforming the tubular wall of the cover to reduce a volume of the storage space, thus fully filling the insulator within the storage space.

3. A method of manufacturing a temperature sensor according to claim 2, wherein the inwardly deforming step crimps an outer wall surface of the tubular wall of the cover to form at least one inward recess in the outer wall surface of the tubular wall of the cover.

4. A method of manufacturing a temperature sensor according to claim 2 or 3, wherein a percentage of reduction the storage space in volume by the inwardly deforming is set within a range from 10 % to 40%.

5. A method of manufacturing a temperature sensor according to any one of claims 2-4, wherein the fixing step fits the one end portion of the lengthy sheath into the tubular wall of the cover such that the insulator filled in the cover is in noncontact with the edge surface of the one end portion of the length sheath.

6. A method of manufacturing a temperature sensor according to any one of claims 2-5, wherein the predetermined volume of the insulator to be filled in the cover is lower than a volume obtained by subtracting a design tolerance ($\Delta v1$) from a design volume ($v1$) of the storage space.

# FIG. 1

# FIG. 2

# FIG. 3

# FIG. 4A

# FIG. 4B

# FIG. 5A

# FIG. 5B

# FIG. 6A

# FIG. 6B

# FIG. 7A

# FIG. 7B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004317499 A